Europäisches Patentamt

European Patent Office

Office européen des brevets

(11) Veröffentlichungsnummer: **0 038 448**
A1

## (12) EUROPÄISCHE PATENTANMELDUNG

(21) Anmeldenummer: 81102473.6

(22) Anmeldetag: 02.04.81

(51) Int. Cl.³: **F 16 D 47/06**
F 16 D 35/00, F 01 P 7/08

(30) Priorität: 23.04.80 DE 3015545

(43) Veröffentlichungstag der Anmeldung:
28.10.81 Patentblatt 81/43

(84) Benannte Vertragsstaaten:
AT BE CH DE FR GB IT LI LU NL SE

(71) Anmelder: Pintsch Bamag Antriebs- und
Verkehrstechnik GmbH
Hünxer Strasse 149
D-4220 Dinslaken(DE)

(72) Erfinder: Steacker, Rudolfo
Rönskenstrasse 48
D-4223 Voerde 1(DE)

(72) Erfinder: Gärtner, Burkhard, Ing.grad.
Augustastrasse 282
D-4220 Dinslaken(DE)

(74) Vertreter: Wilhelm, Hans-Herbert Dr.-Ing. et al,
Wilhelm, Hans-Herbert, Dr.-Ing. Dauster, Hanjörg,
Dipl.-Ing. Patentanwälte Gymnasiumstrasse 31B
D-7000 Stuttgart 1(DE)

(54) Kupplung.

(57) Es wird eine Kupplung, insbesondere für den Lüfterantrieb bei Kühlaggregaten von Verbrennungsmotoren
beschrieben, die elektromagnetisch einschaltbar ist und eine
vom Elektromagneten betätigte Ankerplatte (17) besitzt, die
an einem um die Welle (7) der Kupplung drehbar angeordneten Gehäuse (13) einer Flüssigkeitskupplung befestigt ist.
Durch diese Ausgestaltung wird ein schnelles Schalten der
Kupplung erreicht. Das Drehmoment wird aber weich und
schonend und nicht schlagartig auf die Kupplungswelle und
auf den Lüfter übertragen, ohne daß das flüssige Kupplungsmedium aus dem Gehäuse heraus oder hineingepumpt werden muß.

EP 0 038 448 A1

## Kupplung

Die Erfindung betrifft eine Kupplung, insbesondere für den Lüfterantrieb bei Kühlaggregaten von Verbrennungsmotoren, vorzugsweise von Kraftfahrzeugen, die eine Antriebswelle mit einer Kupplungswelle, auf welcher ein Lüfter befestigt ist, über einen elektromagnetischen Spulenkörper und eine mit diesem zusammenwirkende Ankerplatte verbindet.

Elektromagnet-Kupplungen für den Lüfterantrieb sind bekannt. Durch Erregung einer Gleichstromspule werden Magnetkräfte erzeugt, die eine mit dem Lüfter verbundene Ankerplatte gegen die mit der Antriebsseite fest verbundene Gegenfläche preßt und somit eine kraftschlüssige Verbindung herstellt. Die Erregung der Gleichstromspule erfolgt bei den bekannten Bauarten über im Kühlkreislauf angeordnete Thermoschalter, die bei Über- oder Unterschreiten einer festgelegten Temperatur die Kontakte schließen oder öffnen. Nachteilig ist hierbei, daß die durch die Erregung der Gleichstromspule hervorgerufenen Magnetkräfte eine schlagartige Zuschaltung des Lüfters bewirken, was mit entsprechendem Lärm verbunden ist, da durch den schnellen Hochlauf des Lüfters innerhalb einer sehr kurzen Zeit von einem normalen Lärmpegel ausgehend ein maximaler Wert, erzeugt durch den schnellaufenden Lüfter, erreicht wird.

Ein weiterer Nachteil bekannter Bauarten ist der, daß durch das schlagartige Zuschalten des Lüfters die vorgeschalteten Antriebselemente in hohem Maße beansprucht werden, da an diesen plötzlich hohe Drehmomente angreifen.

Es ist auch bekannt, sogenannte Viskositätskupplungen einzusetzen, bei denen ein teilweise mit Flüssigkeit gefülltes Kupplungsgehäuse die eine Kupplungshälfte und eine im Gehäuse rotierende Scheibe die andere Kupplungshälfte bildet, wobei dann das Drehmoment durch die innere Flüssigkeitsreibung und die Reibung der Flüssigkeit an den Wänden der Kupplungshälften übertragen wird. Dadurch wird gewährleistet, daß das zur Beschleunigung des Lüfters benötigte Drehmoment langsam sich aufbaut, so daß der Lüfter langsam auf seine Nenndrehzahl beschleunigt wird. Drehmomentenstöße beim Einschalten der Kupplung entfallen ganz und die Antriebselemente werden geschont. Der Nachteil dieses Systems liegt aber darin, daß bei ausgeschalteter Kupplung eine relativ hohe Leerlaufdrehzahl besteht, da die sich im Arbeitsraum der Kupplung befindende Flüssigkeit nicht vollständig herausgepumpt werden kann. Das hat zur Folge, daß die Lüfterdrehzahl kaum unter 25 % der Eingangsdrehzahl abfallen kann, was eine relativ hohe Kühlleistung auch in der Phase bewirkt, in der das Kühlmittel nicht gekühlt werden soll. Die optimale Kühlmitteltemperatur kann daher - abhängig von der Jahreszeit - nicht immer erreicht werden, was sich nachteilig auf die Verbrennungs- und Schmiervorgänge eines Verbrennungsmotors auswirken kann.

Der Erfindung liegt die Aufgabe zugrunde, eine Kupplung so auszubilden, daß mit einfachen baulichen Mitteln eine in jeder Phase optimale Kühlmitteltemperatur erreicht werden kann.

Die Erfindung besteht darin, daß die mit einem Spulenkörper zusammenwirkende Ankerplatte an einem um die Kupplungswelle drehbaren Gehäuse einer Flüssigkeitskupplung befestigt ist.

Dadurch wird erreicht, daß nach der Erregung der Gleichstromspule im Spulenkörper dieser schlagartig mit der
Ankerplatte zusammenwirkt und die dadurch hergestellte
Verbindung eine Drehbewegung des Gehäuses der Flüssigkeitskupplung verursacht. Diese Drehbewegung wird aber
langsam durch die Flüssigkeitsreibung auf die Kupplungswelle und damit auf den Lüfter übertragen.

Dadurch wird auch eine Schonung der Antriebselemente erreicht. Um eine niedere Leerlaufdrehzahl zu erreichen,
ist es durch die Erfindung nicht mehr nötig, die sich im
Arbeitsraum der Flüssigkeitskupplung befindende Flüssigkeit herauszupumpen, da bei ausgeschalteter Kupplung die
Verbindung zwischen der am Flüssigkeitskupplungsgehäuse
angebrachten Ankerplatte und dem Spulenkörper gelöst ist
und somit keine Drehmomente auf die Flüssigkeitskupplung
übertragen werden. Dadurch werden auch auf die Kupplungswelle keine Drehmomente übertragen. Hierdurch wird also
ermöglicht, daß auch beim Kaltstart eines Verbrennungsmotors die Kühlmitteltemperatur schnell ansteigen kann, da
die in diesem Bereich über einen Thermoschalter ausgeschaltete Kupplung eine Kühlung des Kühlmittels verhindert.
Von Vorteil ist es hierbei weiterhin, daß die Flüssigkeit
aus der Flüssigkeitskupplung nicht abgepumpt werden muß
und somit unter anderem die für das Abpumpen notwendigen
Bauelemente, wie Zuleitungen, Flüssigkeitsvorratsbehälter
und Pumpe, entfallen können. Dadurch wird nach dem Einschalten der Kupplung eine schnell ansprechende und trotzdem für die Antriebselemente schonende Drehung des Lüfters
erreicht.

In vorteilhafter Ausgestaltung der Erfindung ist vorgesehen, daß die Ankerplatte über eine Membran, die in axialer Richtung beweglich und in Drehrichtung drehsteif ist,
mit dem drehbaren Gehäuse der Flüssigkeitskupplung befestigt ist. Dadurch wird erreicht, daß nach Abschalten

des Stromdurchganges durch die Spule im Spulenkörper die Ankerplatte vom Spulenkörper durch die Membran zurückgezogen wird und dadurch bewirkt, daß die Kupplung vollkommen ausgeschaltet ist. Bei Einschalten der Kupplung gewährleistet die in Drehrichtung drehsteif befestigte Membran eine direkte Übertragung der Drehbewegung des Spulenkörpers auf das drehbare Gehäuse der Flüssigkeitskupplung.

Weiterhin ist vorgesehen. daß die Kupplungswelle in einer in der Mittelbohrung des Spulenkörpers sitzenden Lagerung aufgenommen und abgestützt ist.

Dadurch wird neben einer guten Führung der Kupplungswelle auch erreicht, daß sich der Spulenkörper gegenüber dem Flüssigkeitskupplungsteil auch nicht verschieben kann, wenn die Kupplung ausgeschaltet ist. Die Lagerung der Kupplungswelle kann so vorgenommen sein, daß sich nur eine sehr geringe Leerlaufdrehzahl des Lüfters einstellt.

Es ist weiterhin vorgesehen, die fest mit der Kupplungswelle verbundene Scheibe der Flüssigkeitskupplung im Bereich ihres äußeren Umfanges mit einer wulstartigen Verdickung zu versehen. Dadurch wird ein größere Mitnahmeeffekt der Scheibe erzielt. Da durch die Drehung des Gehäuses der Flüssigkeitskupplung, die sich im Arbeitsraum befindende Flüssigkeit eine Fliehkraft erfährt, verteilt sie sich gleichmäßig als Ring am äußeren Umfang des Arbeitsraumes. Gerade in diesem Bereich weist aber die Scheibe ihre größte Oberfläche und damit auch die größte Angriffsfläche für die rotierende Flüssigkeit auf.

Es ist auch vorgesehen, das Gehäuse der Flüssigkeitskupplung am äußeren Umfang rippenförmig auszubilden. Da durch die Reibung der Flüssigkeit an der Scheibe und dem Gehäuse große Reibungswärmen auftreten, bewirkt die rippenförmige Ausbildung am äußeren Umfang eine gute Kühlung, die bis in den außenliegenden Bereich des Arbeitsraumes, wo die Reibungswärmen am größten sind, zwischen den Rippen wirken kann.

Vorteilhaft ist weiterhin vorgesehen, daß das Gehäuse und der Gehäusedeckel jeweils über ein Lager in axialer Richtung spielfrei auf der Kupplungswelle drehbar angeordnet sind. Diese in axialer Richtung spielfreie Lagerung hat den Vorteil, daß bei Einschalten der Kupplung die über die Membran auf das Flüssigkeitskupplungsgehäuse übertragene laterale Kraftkomponente keine Wirkung auf dieses hat und somit der seitliche Abstand zwischen der Scheibe im Flüssigkeitskupplungsgehäuse und dem Gehäuse selbst immer konstant gehalten werden kann.

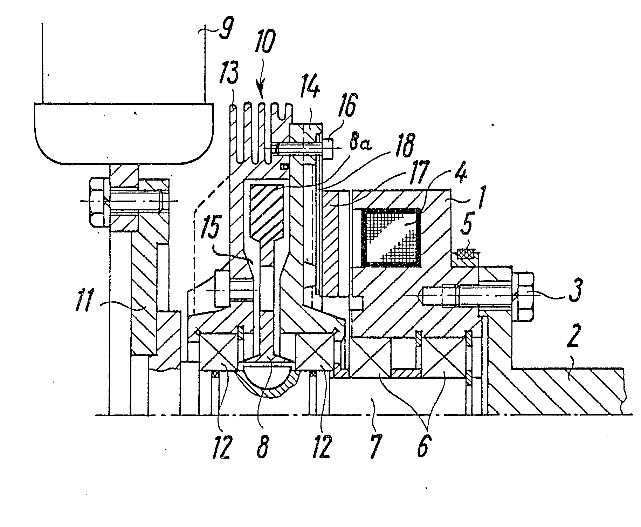

Der Aufbau sowie weitere Merkmale und Vorteile einer erfindungsgemäßen Kupplung ergibt sich aus der in der Zeichnung dargestellten Ausführungsform.

In der Zeichnung ist eine im teilweisen Querschnitt dargestellte, erfindungsgemäß aufgebaute Kupplung mit Lüfter zu sehen, wobei mit 1 ein Spulenkörper bezeichnet ist, der mittels einer Antriebswelle 2 angetrieben wird. Antriebswelle und Spulenkörper sind über eine Schraubenverbindung 3 fest miteinander verbunden. Dabei kann die Antriebswelle 2 mit einer nicht näher dargestellten Riemenscheibe verbunden sein, über die von der ebenso nicht dargestellten Kurbelwelle eines Verbrennungsmotors her die Drehzahl mit Keilriemen übertragen wird.

Der Spulenkörper 1 umschließt die Gleichstromspule 4 und hat als Stromanschluß einen Schleifring 5, auf den z.B. mittels stillstehender Bürsten der Strom übertragen werden kann. Die Lagerung des Spulenkörpers 1 und der Antriebswelle 2 ist in einem nicht näher dargestellten Tragrahmen vorgesehen.

In der Mittelbohrung des Spulenkörpers 1 befindet sich eine aus zwei Kugellagern 6 bestehende Lagerung, welche die Kupplungswelle 7 aufnimmt und abstützt. Dadurch wird zwischen Spulenkörper 1 und Flüssigkeitskupplung 10 auch bei ausgeschalteter Kupplung eine in axialer Richtung liegende Verbindung hergestellt, die ein Verschieben dieser beiden Teile gegeneinander verhindert. Mit der Kupplungswelle 7 sind die Scheibe 8 der Flüssigkeitskupplung 10 und die Lüfterschaufeln 9 über die Befestigungsscheibe 11 fest verbunden. Die Kugellager 12 stützen das Flüssigkeitskupplungsgehäuse 13 und den Gehäusedeckel 14 ab und sind so ausgebildet, daß das Gehäuse 13 und der Gehäusedeckel 14 in axialer Richtung spielfrei auf der Kupplungswelle 7 gedreht werden können. Dadurch wird gewährleistet, daß der Abstand zwischen der Scheibe 8 und dem Gehäuse 13 sowie dem Gehäusedeckel 14 immer konstant gehalten werden kann.

Von dem Gehäuse 13, welches zur besseren Kühlung der Flüssigkeitskupplung 10 am äußeren Umfang rippenförmig ausgebildet ist, und dem Gehäusedeckel 14 wird ein Arbeitsraum 15 umschlossen, in welchem sich ein Fluid, beispielsweise Silikonöl befindet, durch dessen Scherung bei einer Drehzahldifferenz zwischen dem Gehäuse 13 und dem Gehäusedeckel 14 einerseits und der Scheibe 8 andererseits eine Drehmomentübertragung möglich wird. Am fest mit dem Gehäuse 13 verbundenen Gehäusedeckel 14 ist über eine Schraubenverbindung 16 eine Membran 18, die in axialer Richtung beweglich und in Drehrichtung drehsteif ist, befestigt. Auf dieser Membran ist die mit dem Spulenkörper zusammenwirkende Ankerplatte 17 befestigt. Die Membran 18 zieht nach Abschalten des Stromdurchgangs durch die Spule 4 im Spulenkörper 1 die Ankerplatte 17 vom Spulenkörper 1 weg und ermöglicht so eine vollkommene Ausschaltung der Kupplung. Die in Drehrichtung drehsteife Befestigung mit Schrauben 16 erlaubt eine direkte Übertragung - bei eingeschalteter Kupplung - der Drehbewegung des Spulenkörpers 1 auf die Flüssigkeitskupplung 10 bei gleichzeitiger Schonung der Antriebselemente.

Die Wirkungsweise des Systems ist nun folgende:
Der mit der Antriebswelle 2 fest verbundene Spulenkörper 1 läuft konstant mit der Antriebsdrehzahl um. Ein im Kühlmittelkreislauf sitzender, nicht näher dargestellter Thermoschalter schließt seine Kontakte und läßt den Strom über den Schleifring 5 durch die Spule 4 fließen. Das hierdurch vom Spulenkörper 1 aufgebaute Magnetfeld zieht die in axialer Richtung bewegliche Ankerplatte 17 gegen den sich um seine Achse drehenden Spulenkörper 1 und beschleunigt über die drehsteife Membran 17 den Gehäusedeckel 14 und damit auch das Gehäuse 13 der Flüssigkeitskupplung 10. Das sich im Arbeitsraum 15 befindende Fluid verteilt sich durch die Zentrifugalkraft gleichmäßig als Ring am äußeren Umfang des Arbeitsraumes 15 und erfaßt somit die in diesem Bereich vorgesehene Verdickung 8a der Scheibe 8. Durch diese Verdickung 8a wirkt die Flüssigkeit mit einer großen Oberfläche zusammen, wodurch ein großer Mitnahmeeffekt der Scheibe 8 erzielt wird. Durch die innere Flüssigkeitsreibung und die Reibung der Flüssigkeit an der Oberfläche der Scheibe 8 wird so ein Drehmoment auf die Scheibe 8 und damit auch auf die Kupplungswelle 7 übertragen, wodurch die Lüfterschaufeln 9 dann langsam auf die Nenndrehzahl beschleunigt werden. Diese Beschleunigung beginnt sofort nach der Erregung der Spule 4, da sich die Flüssigkeit im Arbeitsraum 15 der Flüssigkeitskupplung 10 auch während der ausgeschalteten Kupplung befindet und nicht nach Einschalten der Kupplung erst eingeleitet werden muß. Die Übertragung der Drehzahl der Antriebswelle auf den Lüfter kann somit bei Schonung der Antriebselemente langsam erfolgen.

Hat das Kühlmittel die untere festgelegte Temperaturgrenze erreicht, öffnet der Thermoschalter seine Kontakte und der Stromdurchgang durch die Spule 4 wird unterbrochen. Der Magnetkreis bricht zusammen und die vorgespannte Membran 18 zieht die Ankerplatte in die Ausgangslage zurück. Hierdurch sind die An- und Abtriebsseite getrennt und die Lüfterschaufeln 9 verringern ihre Drehzahl bis zum Erreichen der Leerlaufdrehzahl.

Dabei hängt die Höhe der Leerlaufdrehzahl von der Konstruktion der Lagerung 6 ab, die so geartet sein kann, daß nur eine sehr geringe Leerlaufdrehzahl erreicht wird. Einrichtungen zur Steuerung der Zu- und Abfuhr des Kupplungsfluids sind nicht erforderlich.

Patentansprüche:

1. Kupplung, insbesondere für den Lüfterantrieb bei
   Kühlaggregaten von Verbrennungsmotoren, vorzugsweise von Kraftfahrzeugen, die eine Antriebswelle
   mit einer Kupplungswelle, auf welcher ein Lüfter
   befestigt ist, über einen elektromagnetischen Spulenkörper und eine mit diesem zusammenwirkende
   Ankerplatte verbindet,
   dadurch gekennzeichnet,
   daß die mit dem Spulenkörper (1) zusammenwirkende
   Ankerplatte (17) an einem um die Kupplungswelle
   (7) drehbaren Gehäuse (13, 14) einer Flüssigkeitskupplung (10) befestigt ist.

2. Kupplung nach Anspruch 1,
   dadurch gekennzeichnet,
   daß die Ankerplatte (17) über eine Membran (18),
   die in axialer Richtung beweglich und in Drehrichtung drehsteif ist, an dem drehbaren Gehäuse (13,
   14) der Flüssigkeitskupplung (10) befestigt ist.

3. Kupplung nach Anspruch 1 und 2,
   dadurch gekennzeichnet,
   daß die Kupplungswelle (7) in einer in einer Bohrung
   im Spulenkörper (1) sitzenden Lagerung (6) aufgenommen und abgestützt ist.

4. Kupplung nach Anspruch 1 bis 3,
   dadurch gekennzeichnet,
   daß die Scheibe (8) fest mit der Kupplungswelle (7)
   verbunden ist und im Bereich ihres äußeren Umfanges
   eine wulstartige Verdickung (8a) aufweist.

5. Kupplung nach Anspruch 1 bis 4,
   dadurch gekennzeichnet,
   daß das Gehäuse (13) der Flüssigkeitskupplung (10) am äußeren Umfang rippenförmig ausgebildet ist.

6.  Kupplung nach Anspruch 1 bis 5,
    dadurch gekennzeichnet,
    daß das Gehäuse (13) und der Gehäusedeckel (14)
    jeweils über ein Kugellager (12) in axialer Richtung spielfrei auf der Kupplungswelle (7) drehbar
    angeordnet sind.

0038448

| Akte: D 5886 | Bl. 1 | Anz. 1 | Patentanwälte Dr.-Ing. H. H. Wilhelm Dipl.-Ing. H. Dauster 7000 Stuttgart 1 |
| Anm. Pintsch Bamag | | | |

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 120 219 (NALLINGER)<br>* Spalte 3, Zeile 3 - Spalte 4, Zeile 6; Figuren 1,2 *<br>-- | 1 | F 16 D 47/06<br>35/00<br>F 01 P 7/08 |
| | FR - E - 80 850/1252081 (FERODO)<br>* Seite 2, linke Spalte, Zeilen 27-41; Figuren 1,2 *<br>-- | 2 | |
| | US - A - 4 050 559 (ANDREWS)<br>* Spalte 1, Zeile 66 - Spalte 2, Zeile 15; Figur 1 *<br>-- | 4,5 | **RECHERCHIERTE SACHGEBIETE** (Int Cl )<br><br>F 16 D 47/00<br>35/00<br>F 01 P 7/00 |
| A | GB - A - 2 014 282 (BEHR) | 1 | |
| A | US - A - 4 056 178 (DETTY)<br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prufer |
|---|---|---|
| Den Haag | 25-05-1981 | WEBER |

EPA form 1503.1   06.78